(19) Europäisches Patentamt
European Patent Office
Office européen des brevets

(11) Veröffentlichungsnummer: **0 023 586**
**B1**

(12) # EUROPÄISCHE PATENTSCHRIFT

(45) Veröffentlichungstag der Patentschrift: **09.03.83**

(21) Anmeldenummer: **80103870.4**

(22) Anmeldetag: **08.07.80**

(51) Int. Cl.³: **C 08 G 18/54**, C 08 G 18/08, C 08 L 75/04, C 08 K 7/14, C 08 J 5/04

(54) **Hitzehärtbare Formmassen, Verfahren zu deren Herstellung und Verfahren zur Herstellung von Formkörpern unter Verwendung der Formmassen.**

(30) Priorität: **18.07.79 DE 2928966**

(43) Veröffentlichungstag der Anmeldung: **11.02.81 Patentblatt 81/06**

(45) Bekanntmachung des Hinweises auf die Patenterteilung: **09.03.83 Patentblatt 83/10**

(84) Benannte Vertragsstaaten: **AT BE CH DE FR GB IT LI**

(56) Entgegenhaltungen:
**EP A 0 006 557**
**WO A 79/00223**
**DE A 1 193 667**
**GB A 1 301 990**
**US A 3 730 936**

(73) Patentinhaber: **BAYER AG**
**Zentralbereich Patente, Marken und Lizenzen**
**D-5090 Leverkusen 1, Bayerwerk (DE)**

(72) Erfinder: **Heine, Heinrich**
**Müritzstrasse 38**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 023 586 B1

Jouve, 18, rue St-Denis, 75001 Paris, France

# Hitzehärtbare Formmassen, Verfahren zu deren Herstellung und Verfahren zur Herstellung von Formkörpern unter Verwendung der Formmassen

Die Erfindung betrifft lagerstabile, lösungsmittelfreie und hitzehärtbare Formmassen auf Polyurethanbasis, die ein faserförmiges Verstärkungsmaterial enthalten, ein Verfahren zu ihrer Herstellung, sowie die Herstellung von faserverstärkten Formkörpern unter Verwendung der Formmassen.

Faserverstärkte Formkörper können nach Verfahren des Standes der Technik mit einer Vielzahl unterschiedlicher synthetischer Polymerer hergestellt werden, wobei sich als besonders vorteilhaftes Verstärkungsmaterial Glasfasern erwiesen haben. Es ist z. B. bekannt, aus ungesättigte Polyester enthaltenden Harzen (im folgenden « UP-Harze » genannt) und Glasfasern lagerstabile Halbzeuge (Harzmatten, « Prepregs » ; Preßmassen) herzustellen, die mit Hilfe beheizter Pressen verformt und zu Formkörpern sehr hoher Festigkeit und Steifigkeit ausgehärtet werden können. Dieses Verfahren hat jedoch mehrere Nachteile : So führen die üblicherweise als Lösungsmittel für die UP-Harze verwendeten vinylgruppenhaltigen Monomeren (z. B. Styrol) bei der radikalisch initiierten Polymerisation zu einer sehr hohen Vernetzungsdichte, die eine hohe Sprödigkeit und Kerbschlagempfindlichkeit des Formkörpers bewirkt. Überdies erschwert die Anwesenheit von Lösungsmitteln die Verarbeitung, da umfangreiche Maßnahmen zur Absaugung der Lösungsmitteldämpfe getroffen werden müssen und explosionsgeschützte Verarbeitungsanlagen erforderlich sind.

« Ein-Lagen-Laminate », bestehend aus einer flächenförmigen Glasfaserformation und Epoxidharzen als Bindemittel werden z. B. in großem Umfang in der Skiindustrie für die Herstellung von Sandwichbauteilen verwendet.

Daneben werden aber auch dickere Laminate benötigt, die aus mehreren Lagen eines mit einem hitzehärtbaren Bindemittel imprägnierten Glasgewebes bestehen. Solche « Schichtpreßstoffe » werden bisher ebenfalls mit Epoxidharzen als Bindemittel hergestellt. Epoxidharze bilden mit bestimmten Härtern, meist aromatischen Aminen oder Dicyandiamid, einen « B-Zustand », d. h. einen Zwischenzustand, in dem das zunächst flüssige Harz-Härter-Gemisch bereits erstarrt, aber noch nicht vollständig ausgehärtet ist. Das in diesem Zwischenzustand befindliche Harz ist spröde, bröckelig und kann sowohl noch in einem Lösungsmittel (z. B. Aceton) bei Raumtemperatur gelöst als auch bei erhöhter Temperatur, z. B. 160 °C, noch einmal aufgeschmolzen werden. In diesem B-Zustand liegt also ein bereits teilvernetztes Harz mit noch thermoplastischem Charakter vor, daneben sind aber auch noch freie Epoxidgruppen und Aminogruppen vorhanden. Durch relativ geringfügige Energiezufuhr werden auch die restlichen Epoxid- und Aminogruppen miteinander zur Reaktion gebracht, so daß das Harz geliert. In diesem Zustand (« C-Zustand ») läßt sich das Harz nicht mehr in üblichen Lösungsmitteln lösen und auch nicht mehr aufschmelzen.

Bei üblichen Polyurethanharzen war ein solches Verhalten bisher nicht bekannt. Die in der Praxis verwendeten Zweikomponentensysteme aus (nicht verkapptem) Isocyanat und Polyol reagieren alle in einem Schritt bis zum duroplastischen Kunststoff durch. Grund hierfür ist die hohe Wärmeentwicklung bei der Härtung im Block und die niedrige Wärmeformbeständigkeit (Glasübergangstemperatur) des erhaltenen Duroplasts. Einen weiteren Grund, keine Versuche in Richtung solcher lagerstabilen Zwischenprodukte zu unternehmen, sah man in der Wasserempfindlichkeit der Isocyanate. Es wurde angenommen, daß die freien Isocyanatgruppen in einem solchen « B-Zustand » mit Luftfeuchtigkeit reagieren würden, wie es z. B. in Einkomponentenlacken der Fall ist, und daß somit keine genügende Lagerstabilität des Materials im « B-Zustand » gegeben sei.

Bekannt ist jedoch generell die Herstellung von glasfaserverstärkten Polyurethan-Kunststoffen (siehe z. B. DE-OS 2 164 381, DE-OS 2 014 899 und US-PS 3 678 009 sowie das Standard-Werk von P.H. Selden, « Glasfaserverstärkte Kunststoffe », Springer-Verlag Berlin, 1967). So können z. B. nach dem Spritzgieß- oder Reaktionsspritzgießverfahren glasfaserverstärkte Polyurethanformkörper hergestellt werden. Die mechanischen Eigenschaften, insbesondere die Biegefestigkeit, solcher Formkörper lassen sich jedoch nur in begrenztem Maße steigern, da aus verfahrenstechnischen Gründen die Länge des Fasermaterials ca. 1 bis 6 mm nicht übersteigen darf. Als besonders nachteilig muß angesehen werden, daß aufgrund der begrenzten Faserlänge der thermische Ausdehnungskoeffizient der verstärkten Polyurethan-Elastomeren immer noch ein Vielfaches des Ausdehnungskoeffizienten von Stahl beträgt.

In der DE-PS 968 566 wird ein Verfahren zur Herstellung hochmolekularer, vernetzter Kunststoffe beschrieben, bei welchem zunächst aus einem Hydroxylgruppen aufweisenden Polyester, einem Glykol und einem Unterschuß an Diisocyanat ein Zwischenprodukt hergestellt wird, das dann durch Umsetzung mit einem Überschuß eines Uretdiongruppen-haltigen Diisocyanats zu lagerstabilen Halbzeugen führt. Diese Halbzeuge können schließlich plastisch verformt und durch Temperatureinwirkung zu elastischen Formkörpern ausgehärtet werden.

Die in dieser Patentschrift beschriebenen Polyurethan-Elastomere sind überwiegend linear aufgebaut und besitzen zwar hohe Elastizität und Zähigkeit, reichen aber in ihrer Härte und Steifigkeit für viele Anwendungen nicht aus. Die Verwendung von faserförmigem Verstärkungsmaterial wird in DE-PS 968 566 nicht erwähnt. Zwar ließen sich Glasfasern mit einer Länge >6 m prinzipiell in das oben erwähnte Zwischenprodukt einarbeiten ; die hohe Viskosität des Zwischenproduktes würde aber zum Einmischen des Fasermaterials und des für die Vernetzung notwendigen Uretdiondiisocyanats Walzwerke oder Kneter erfordern, wie sie bei der Kautschukverarbeitung üblich sind. Bei einem solchen Einarbeiten des

Fasermaterials würden jedoch verfahrensbedingt so hohe Scherkräfte auftreten, daß die Einzelfasern auf Bruchteile ihrer Ausgangslänge zermahlen werden, so daß die gewünschten Effekte der Versteifung einerseits und der Senkung des thermischen Ausdehnungskoeffizienten andererseits nicht mehr in vollem Umfang eintreten könnten.

Glasfaserverstärkte Flächengebilde auf Polyurethanbasis, welche durch Imprägnierung von Glasfasermatten mit Reaktionsgemischen aus Polyisocyanaten und höhermolekularen Polyhydroxylverbindungen unter anschließender Aushärtung durch Erhitzen hergestellt werden, sind in US-PS 3 061 497, US-PS 3 730 936, GB-PS 1 139 114 und GB-PS 1 226 843 beschrieben. Der wesentliche Nachteil all dieser Verfahren liegt darin, daß die den Glasfasern immer anhaftende Feuchtigkeit infolge Reaktion mit dem Polyisocyanat zur Blasenbildung im Produkt führt. Wegen des auf diese Weise um die Faser herum entstandenen Schaums sind diese Schichten hohen Festigkeitsansprüchen nicht gewachsen. Besonders macht sich das bei der dynamischen Beanspruchung bemerkbar. Die Wechselfestigkeit ist gering. Nachteilig ist auch, daß bei der Härtung im allgemeinen bei relativ hohem Druck gearbeitet wird.

In der DE-AS 1 193 667 wird ein Verfahren zur Herstellung von Elektroisolierkörpern mit verbesserter Kriechstromfestigkeit aus Phenolharzen, (Phenol-) verkappten Polyisocyanat, Füllstoffen und Entformungsmitteln beschrieben, wobei das verkappte Polyisocyanat erst bei Temperaturen oberhalb etwa 150 °C spaltet, man das Aushärten bei 150 °C bis zur Entfernung des Lösungsmittels durchführt und anschließend bei 165 bis 200 °C zu Ende härtet.

Für das Verfahren müssen erhebliche Mengen des « Verkappungsmittels » Phenol in Form seines Adduktes an das Polyisocyanat eingeführt werden. Bei den hohen Temperaturen (165-200 °C) wird das Phenol wieder frei, muß durch Verdampfung entfernt werden, und es reagieren dabei die OH-Gruppen des Phenolharzes unter Vernetzung zum Hochpolymeren. Die freigesetzten Phenolmengen erfordern wegen ihrer umweltbelastenden Wirkung erhebliche Aufwendungen. Darüber hinaus können in dickeren Schichten auch Phenolanteile im Formkörper verbleiben und wirken weichmacherartig.

Der Erfindung liegt die Aufgabe zugrunde, neue, lösungsmittelfreie, lagerstabile Formmassen zur Verfügung zu stellen, die durch Verpressen bei erhöhter Temperatur zu blasenfreien Formkörpern hoher Steifigkeit, guter Schlagzähigkeit und hoher Dimensionsstabilität ausgehärtet werden können.

Diese Aufgabe wird mit den erfindungsgemäß zur Verfügung gestellten Formmassen gelöst. Überraschenderweise zeigten sich auch die Formmassen aus Novolaken und freien Polyisocyanaten als hinreichend lagerbeständig, ergeben keine Probleme mit ausdampfenden bzw. im Formkörper verbleibenden Verkappungsmitteln wie Phenol und sind bei tieferen Temperaturen umsetzbar, besonders bei Mitverwendung weiterer Polyhydroxylverbindungen.

Gegenstand der Erfindung sind lösungsmittelfreie Formmassen, bestehend aus

A. 10 bis 80 Gew.-%, vorzugsweise 20 bis 50 Gew.-%, eines lagerstabilen, durch Erhitzen zu einem vernetzten duropiastischen Polyurethan härtbaren Reaktivharz-Bindemittels und

B. 20 bis 90 Gew.-%, vorzugsweise 50 bis 80 Gew.-%, eines anorganischen Füllstoffes, welche dadurch gekennzeichnet sind, daß Komponente A. ein bei 25 °C klebfreies, unter 160 °C, vorzugsweise unter 140 °C, schmelzendes, noch freie NCO- und OH-Gruppen enthaltendes Umsetzungsprodukt aus

a) einem Novolak

b) 0 bis 75 Gew.-%, vorzugsweise 0 bis 50 Gew.-%, bezogen auf a) + b), einer Polyhydroxylverbindung mit einem Molekulargewicht zwischen 62 und 10 000, welche mindestens 2 Hydroxylgruppen aufweisende Polyether, Polyester, Polyesteramide, Polycarbonate und Polythioether mit einem Molekulargewicht von 400 bis 10 000, vorzugsweise zwischen 400 und 5 000, als auch Polyole vom Molekulargewicht 62-400 sind,

c) einem Polyisocyanat in einem Äquivalentverhältnis (a + b) : c von 0,8 : 1 bis 1,2 : 1, vorzugsweise 0,9 : 1 bis 1,1 : 1, besonders bevorzugt etwa 1 : 1, und Komponente B. ein anorganisches Fasermaterial, bevorzugt aus Glasfasern mit einer Stärke von vorzugsweise 5 bis 50μm, insbesondere 8 bis 30μm, ist.

Gegenstand der Erfindung ist auch ein Verfahren zur Herstellung der Formmassen, welches dadurch gekennzeichnet ist, daß man das anorganische Fasermaterialßmit dem Reaktivharz A. in der Schmelze oder vorzugsweise gelöst in einem gegenüber den Reaktionspartnern inerten organischen Lösungsmittel, vermischt und das Reaktivharz durch Erwärmen auf 120 bis 220 °C, unter Verdampfen des gegebenenfalls mitverwendeten Lösungsmittels, teilweise aushärtet, so daß das Harz bei 25 °C bereits klebfrei ist aber noch einen Schmelzpunkt unterhalb von 160 °C, vorzugsweise unterhalb von 140 °C, aufweist.

Gegenstand der Erfindung ist schließlich auch ein Verfahren zur Herstellung faserverstärkter duroplastischer Formkörper, welches dadurch gekennzeichnet ist, daß man die erfindungsgemäßen Formmassen durch Erhitzen auf 140 bis 220 °C, vorzugsweise 160 bis 200 °C, unter Formgebung aushärtet.

Die im erfindungsgemäßen Verfahren einzusetzenden Novolake a) sind an sich bekannte Phenol-Formaldehyd-Kondensate, die eine Hydroxylfunktionalität von mindestens 3, einen Gehalt an Hydroxylgruppen von mindestens 12, im allgemeinen von ca. 15 bis 17 Gew.-%, einen Erweichungspunkt von vorzugsweise ca. 75 bis 150 °C, besonders bevorzugt 75 bis 100 °C, und als 30 %ige Lösung in Kresol/Xylol (1 : 1) eine Viskosität von vorzugsweise ca. 100 bis 1 000, besonders bevorzugt 250 bis 500 mPa.s

aufweisen. Derartige phenolische Hydroxylgruppen aufweisende Phenol-Formaldehyd-Kondensate können beispielsweise gemäß « Kunststoff-Handbuch », Band X, « Duroplaste » von Vieweg/Becker, Carl Hanser Verlag, München 1968, Seiten 30 und 47/48, oder « Methoden der organischen Chemie », Makromolekulare Stoffe, Teil 2, Houben-Weyl, Band XIV/2, Seiten 272-273, Georg Thieme Verlag, Stuttgart, hergestellt werden.

Die Novolake entsprechen in der Regel der folgenden idealisierten Strukturformel :

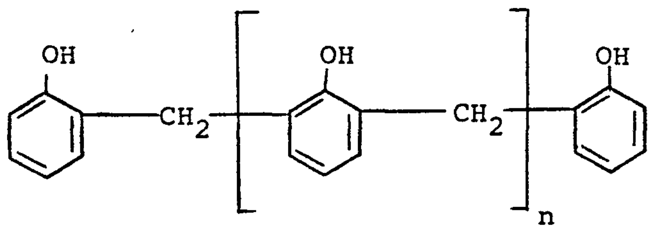

wobei n für eine ganze Zahl von 1 bis 11 steht.

Verzweigte oder strukturisomere Moleküle (Verknüpfung über die para-Stellung) liegen in der Regel nur in untergeordneten Anteilen vor.

Als gegebenenfalls mitzuverwendende Polyolkomponente b) kommen erfindungsgemäß sowohl die aus der Polyurethanchemie an sich bekannten, mindestens 2, in der Regel 2 bis 4, Hydroxylgruppen aufweisenden Polyester, Polyesteramide, Polycarbonate, Polyacetale, Polythioether und vorzugsweise Polyether mit einem Molekulargewicht von 400 bis 10 000, bevorzugt 500 bis 5 000, als auch Polyole vom Molekulargewicht 62 bis 400 in Betracht, wie sie als Kettenverlängerungs-bzw. Vernetzungsmittel an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure ; Terephthalsäuredimethylester und Terephthalsäure-bis-glykolester. Als mehrwersige Alkohole kommen z. B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z. B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischäther, Polythioätherester oder Polythioätheresteramide.

Als Polyacetale kommen z. B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751 ; DE-Offenlegungsschrift 2 605 024).

Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen, z. B. Mischungen von Polyethern und Polyestern, eingesetzt werden.

Bevorzugte Komponente b) sind, wie schon erwähnt, Polyetherpolyole, insbesondere solche, welche keine tertiären Stickstoffatome aufweisen.

Als Beispiele für niedermolekulare Polyole seien genannt :

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethylhydrochinon, N-Methyldiethanolamin und Triethanolamin.

Als niedermolekulare Polyole kommen erfindungsgemäß auch die Gemische von Hydroxyaldehyden und Hydroxyketonen (« Formose ») bzw. die hieraus durch Reduktion erhaltenen mehrwertigen Alkohole (« Formit ») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Als Ausgangskomponenten c) kommen erfindungsgemäß die an sich bekannten aliphatischen, cycloaliphatischen, araliphatischen und vorzugsweise aromatischen Polyisocyanate in Betracht, beispielsweise 1,4-Tetramethylendiisocyanat, 1,6-Hexamethylendiisocyanat, 1,12-Dodecandiisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan, 1,3- und 1,4-Phenylendiisocyanat, 2,4- und 2,6-Toluylendiisocyanat sowie beliebige Gemische dieser Isomeren 2,4- und 2,6-Hexahydrotoluylendiisocyanat sowie beliebige Gemische dieser Isomeren, Diphenylmethan-4,4'-diisocyanat, Diphenylmethan-2,4'-diisocyanat, Triphenylmethan-4,4',4"-triisocyanat sowie bevorzugt technische Polyphenyl-polymethylenpolyisocyanatgemische, wie sie durch Anilin-Formaldehyd-Kondensation und anschließende Phosgenierung erhalten werden ; geeignet sind auch die aus der Polyurethanchemie an sich bekannten, Allophanat- oder Biuretgruppen aufweisenden Isocyanate, wie sie durch Umsetzung von Polyolen bzw. Wasser oder Polyaminen mit einem Überschuß der genannten Polyisocyanate erhalten wurden. Auch Umsetzungsprodukte aus den oben beschriebenen Polyhydroxylverbindungen und überschüssigen Mengen an Polyisocyanat (sogenannte NCO-Präpolymere) können im erfindungsgemäßen Verfahren als Isocyanatkomponente verwendet werden. Die bei der Herstellung derartiger modifizierter Polyisocyanate verwendeten Polyole sind Komponente b) zuzurechnen.

Selbstverständlich ist es auch möglich, beliebige Mischungen der obengenannten Polyisocyanate zu verwenden.

Als Verstärkungsmaterialien kommen Glasfasern mit unterschiedlichem Durchmesser und in unterschiedlicher Verarbeitungsform z. B. als Glasfaserroving, Glasfasermatte, Glasfaservlies, Glasfasergewebe mit gleicher oder unterschiedlicher Glasmenge in Kettund Schußrichtung und Glasfasergelege in Frage, wobei die Glasfasern mit Ausnahme des Rovings als Endlosfasern oder als Stapelfasern vorliegen können. Auch andere Verstärkungsfasern auf anorganischer Basis wie z. B. Asbest-, Ton- und andere Mineralfasern sowie Kohlenstoff-Fasern, Borfasern, $Al_2O_3$-Fasern, Whisker und Metallfasern können erfindungsgemäß eingesetzt werden.

Bevorzugt sind erfindungsgemäß Materialien aus Glasfasern mit einem Durchmesser von vorzugsweise 5 bis 50μm, die in an sich bekannter Weise mit Schlichten ausgerüstet sind, welche den Fasern eine Affinität zu Polyurethanen verleihen (s. z. B. DE-AS 2 426 657 und DE-AS 2 426 654).

Selbstverständlich können zusätzlich noch an sich bekannte anorganische Füllstoffe mitverwendet werden.

Zur Herstellung der erfindungsgemäßen Formmassen wird die Polyolkomponente (Gemisch von a) und b)) entweder in der Schmelze oder bevorzugt in Form einer 30 bis 90 Gew.-%igen, vorzugsweise 50 bis 80 %igen Lösung mit dem Polyisocyanat c) vermischt.

Als Lösungsmittel kommen alle mit Isocyanaten nicht reagierenden üblichen Lösungsmittel mit Siedepunkten unter 150 °C, vorzugsweise unter 115 °C, besonders bevorzugt unter 85 °C, in Frage, z. B. gegebenenfalls halogensubstituierte aliphatische und aromatische Kohlenwasserstoffe, Ketone, Ether und Ester. Alkohole entfallen wegen ihrer Reaktion mit Isocyanaten. Besonders bevorzugt sind Ketone wie Aceton und Methylethylketon ; darüber hinaus seien auch Toluol, Ethylacetat, Diisopropylether, Ethylenglykolmonomethyletheracetat und Ligroin genannt.

Das so erhaltene Reaktivharz wird zweckmäßigerweise in die Tränkwanne einer Imprägnieranlage gegeben, durch die dann das Fasermaterial, z. B. eine Glasgewebebahn mit einem Flächengewicht von 40 bis 500 g/m², gezogen wird. In der Imprägniermaschine wird bei Temperaturen zwischen ca. 60 und 220 °C (evtl. mit einem Temperaturgradienten innerhalb der Anlage) das Lösungsmittel abgedampft und gleichzeitig eine Vorreaktion zwischen Novolak, gegebenenfalls weiterem Polyol und Isocyanat durchgeführt. Nach dem Abkühlen auf Raumtemperatur ist der so erhaltene « Prepeg » (= preimpregnated materials) hart und klebfrei. Beim Wiedererwärmen schmilzt das Harz kurzfristig noch einmal auf, um dann zu gelieren. Die Prepregs sind beim offenen Lagern an der Luft einige Wochen (4-6 Wochen), unter Feuchtigkeitsausschluß, z. B. in Aluminium-Behältern, einige Monate (bisherige Erfahrung ≥ 3 Monate) haltbar.

Durch einen einfachen Versuch läßt sich die Zeitdauer feststellen, nach welcher sich der gewünschte B-Zustand des Reaktivharzes gebildet hat : Proben des Reaktivharzes werden nach unterschiedlich langer Wärmebehandlung entnommen und auf Raumtemperatur gekühlt. Der B-Zustand ist erreicht, wenn die Probe nicht mehr klebrig und nicht mehr milchig-trüb ist sondern beim Abkühlen glasartig-klar bleibt.

Das Ende des B-Zustandes ist erreicht, sobald der Erweichungspunkt der Probe 160 °C überschreitet.

Im B-Zustand enthält das Reaktivharz sowohl freie NCO- als auch OH-Gruppen. Je nach Funktionalität der Ausgangskomponenten a) bis c) liegt im B-Zustand ein Umsetzungsgrad der Polyadditionsreaktion von vorzugsweise etwa 20 bis 70 %, insbesondere 25 bis 50 %, vor, wobei der B-Zustand umso früher erreicht wird, je höherfunktionell der Novolak bzw. das Polyisocyanat sind.

Die Mitverwendung von Lösungsmittel bringt nicht nur den Vorteil einer leichteren Verarbeitbarkeit und längeren Topfzeit des Reaktivharzes, sondern vermeidet auch mit Sicherheit jede Bläschenbildung in der Formmasse.

Aufgrund der bisherigen Erfahrungen war nicht zu erwarten, daß ein Verbundmaterial aus Glasgewebe und Polyurethan blasenfrei herstellbar ist. Wie oben erwähnt, reagieren die Isocyanate, die für die Herstellung von Polyurethanen als Reaktionskomponente benötigt werden, mit dem der Glasfaser anhaftenden Wasser unter Schaumbildung, was auch bei Einsatz der üblichen wasserabsorbierenden Zusätze nicht zu vermeiden ist, da das Isocyanat unter den Verarbeitungsbedingungen mit dem Wasser schneller als mit dem Polyol reagiert und in der kurzen Reaktionszeit das wasserabsorbierende Mittel nicht ausreichend wirksam werden kann.

Es ist als überraschend anzusehen, daß diese Schwierigkeit durch die Mitverwendung von relativ niedrigsiedenden Lösungsmitteln vermieden werden kann : Derartige Lösungsmittel sind nämlich in aller Regel nicht in der Lage, das fertig ausreagierte Polyurethanharz zu lösen, so daß der Fachmann annehmen mußte, daß man beim erfindungsgemäßen Verfahren keine kompakten, blasenfreien Formkörper sondern vielmehr — in Analogie zur technischen Lehre der DE-AS 1 694 180 (US-PS 3 582 396) — mikroporöse Schichtstoffe erhalten würde.

Aus den erfindungsgemäßen Formmassen, welche sich wie oben erläutert, im lagerfähigen B-Zustand befinden, lassen sich durch Erwärmen auf ca. 140 bis 220 °C, vorzugsweise 160 bis 200 °C, unter Formgebung, zweckmäßigerweise bei einem Druck von ca. 2 bis 40 bar, duroplastische, faserverstärkte Formkörper herstellen. Das im B-Zustand befindliche Harz schmilzt dabei kurz auf, geliert und wird schließlich fest. In der Regel geht man dabei so vor, daß man flächenförmige Prepregs mit einer Schichtdicke von ca. 0,05 bis 1 mm herstellt, dann soviele Schichten übereinanderlegt, bis die gewünschte Dicke des Formkörpers erreicht ist, und dann das Mehrlagen-Laminat verpreßt.

Selbstverständlich ist es erfindungsgemäß auch möglich, den B-Zustand nicht zu isolieren sondern den duroplastischen Formkörper aus den Ausgangskomponenten in einem Schritt herzustellen.

Es ist als überraschend anzusehen, daß durch Abkühlen des Reaktionsgemisches aus den Komponenten a) bis c) lagerfähige Massen hergestellt werden können und die Aushärtungsreaktion unterbrochen wird, obgleich in der Praxis dem Fachmann die Verarbeitung von Polyurethanharz gerade auch bei niedrigen Temperaturen empfohlen wird. Weiter ist erstaunlich, daß schon durch die erste Reifung der ungünstige Einfluß des Wassers ausgeschieden wird, so daß später auch das Endprodukt blasenfrei ist. Wichtig ist jedoch, daß das Lösungsmittel vor dem Abkühlen verdampft ist. Dadurch wird erreicht, daß beim Verpressen mehrerer Schichten keine Lösungsmittelreste eingeschlossen werden, die später Blasen bilden können.

Trotz der freien NCO-Gruppen sind die erfindungsgemäßen Massen auch gegenüber Luftfeuchtigkeit sehr beständig. Die Möglichkeit, derartige lagerbeständige Zwischenprodukte verarbeiten zu können, ist für den Verarbeiter besonders vorteilhaft, da die Prepregs vorgefertigt und bevorratet werden können. Eine direkte Berührung mit dem Harz bleibt dem Verwender erspart, auch entstehen während der Verarbeitung keine Dämpfe oder Gase. Das Prepreg ist also umweltfreundlich.

Die erfindungsgemäß hergestellten duroplastischen glasfaserverstärkten Polyurethanformkörper haben unter anderem den technischen Vorteil, daß sie hohe dynamische und statische Festigkeitswerte aufweisen. Der Grund hierfür ist die flächige direkte Überleitung der Kräfte zwischen Kunststoff und Glasfaser. Auch die Klebefestigkeiten solcher Schichten aus glasfaserverstärktem Polyurethanharz sind bei Verwendung von Zweikomponentenklebern, z. B. auf Epoxid- oder Polyurethanharzbasis, ausgezeichnet, so daß eine einmal aufgeklebte Schicht nicht mehr ohne Zerstörung von ihrer Unterlage zu trennen ist.

Die erfindungsgemäßen Massen eignen sich für die Herstellung der verschiedensten faserverstärkten Formkörper und Sandwichbauteile, beispielsweise im Fahrzeugsektor, wobei Gehäuse, Türen und Aufbauten hergestellt werden können, weiter im Sportartikelsektor, z. B. für Skier, Surfbretter oder Wasserskier und für andere Gebrauchsartikel, die häufig dynamischen Belastungen ausgesetzt werden.

Weiter können damit Schichtpreßstoffe für die Elektroindustrie hergestellt werden. Diese können zu Nutenkeilen, Federelementen, Isolierplatten oder Schrauben weiterverarbeitet werden.

Durch Aufkaschieren einer oder mehrerer Kupferfolien auf das Laminat und anschließendes teilweises Abätzen des kupfers lassen sich Leiterplatten, wie sie z. B. für Funk- und Fernsehgeräte oder durch in der Computer-Industrie benötigt werden, herstellen.

## Beispiele

Die folgenden Beispiele dienen zur Erläuterung der Erfindung. Wenn nicht anders vermerkt, sind Mengenangaben als Gewichtsteile bzw. Gewichtsprozente zu verstehen.

In den Beispielen wurde ein aus Phenol und Formaldehyd im Molverhältnis 1 Mol Phenol : 0,85 Mol Formaldehyd in saurem Medium (Gegenwart von Oxalsäure) hergestellter Novolak eingesetzt.

Der Novolak stellt ein Gemisch mehrkerniger Verbindungen der Diphenylmethanreihe dar, der durch folgende Kennzahlen charakterisiert werden kann :

| | |
|---|---|
| Erweichungspunkt : | 75-90 °C |
| Viskosität einer 30 %igen Lösung in Kresol/Xylol : | ca. 350 mPa.s |
| Dichte : | ca. 1,3 g/m$^3$ |
| OH-Zahl : | 530-540 |

Der Novolak läßt sich, gelöst in einem Lösungsmittel, mit Polyisocyanaten vermischen. Man erhält homogene Lösungen, die eine ausgezeichnete Lagerfähigkeit im Bereich von mehreren Stunden bis Tagen aufweisen (jenach Konzentration) und die sich somit ausgezeichnet verarbeiten lassen.

### Beispiel 1

100 Teile des Novolaks werden in 95 Teilen Aceton gelöst. Zu dieser Lösung gibt man 123 Teile eines Gemisches aus 40 % 4,4'- und 60 % 2,4'-Diisocyanatodiphenylmethan. Der so hergestellte Ansatz ist bei Raumtemperatur ca. 60 Stunden lagerfähig.

Das Gemisch wird in die Tränkwanne einer Imprägnieranlage, wie sie zur Herstellung von Epoxidharzprepregs gebräuchlich ist, geschüttet. Dann wird ein Glasgewebe mit einem Flächengewicht von 200 g/m$^2$ und nahezu gleicher Glasfasermenge in Kett- und Schußrichtung, bei dem die Schlichte durch eine Wärmebehandlung entfernt worden war, durch die Lösung gezogen und somit imprägniert. In

der Imprägnieranlage werden im Verlauf von 3 Minuten bei Temperaturen zwischen 60 °C (unten) und 160 °C (oben) das Lösungsmittel von der Glasgewebebahn abgedunstet und gleichzeitig das Polyurethanharzsystem vorgereift. Es entsteht eine trockene, klebfreie, 30 Gew.-% Bindemittel enthaltende imprägnierte Glasgewebebahn, deren Harzmasse sich durch Hitze und Druck nochmals verflüssigen läßt (das Bindemittel enthält noch ca. 10 % NCO-Gruppen).

24 Lagen dieser Prepregs der Größe 300 × 300 mm werden aufeinandergelegt und in einer Presse mit einem Druck von 39,2 bar bei 180 °C während 2 Stunden zu einer 4 mm starken Platte verarbeitet, an der folgende Festigkeitswerte ermittelt werden konnten :

| | | | | |
|---|---|---|---|---|
| Zugfestigkeit | (DIN 53 455) | MPa | | 406 |
| Reißdehnung | (DIN 53 455) | % | | 1,7 |
| Biegefestigkeit | (DIN 53 452) | MPa | 25 °C | 517 |
| | | | 60 °C | 478 |
| | | | 100 °C | 446 |
| | | | 140 °C | 442 |
| | | | 180 °C | 345 |
| | | | 220 °C | 47 |

Beispiel 2

Analog zu Beispiel 1 wird eine 70 %ige Lösung in Aceton eines Gemisches aus dem Novolak und einem hauptsächlich aus 4,4'-Diisocyanatodiphenylmethan und höherkernigen Homologen bestehenden technischen Polyisocyanats (NCO-Gehalt : 31,7 %) im NCO/OH-Äquivalentverhältnis von 1 : 1 hergestellt. Die Lösung bleibt ca. 24 Stunden lang stabil.

Wie in Beispiel 1 beschrieben, wird durch diese Reaktivharzlösung ein Glasgewebe gezogen, imprägniert und anschließend getrocknet. Bei einer Verweilzeit von 3 Minuten in Trockenkanal muß in diesem Fall wegen der höheren Reaktivität des Polyisocyanats eine um 10 °C niedrigere Trockentemperatur im oberen Bereich der Anlage (also 60 °C bis 150 °C) gewählt werden als in Beispiel 1, um ein optimal verarbeitbares Prepreg zu erhalten. Die Harzmasse enthält ca. 12 % freie NCO-Gruppen.

In gleicher Weise wie oben beschrieben werden 24 Lagen der Prepregs verpreßt. Die so erhaltene Platte weist folgende Festigkeitswerte auf :

| | | |
|---|---|---|
| Zugfestigkeit : | MPa | 375 |
| Beigefestigkeit : | MPa | 515 |
| Druckfestigkeit : | MPa | 402 |
| Martensgrad : | °C | 240 |
| Glasgehalt : | % | 66 |

Beispiel 3

Ein Glasfaser-Rovingstrang mit 2 400 tex (= 2 400 g pro 1 000 m) und einer Kunststoffschlichte gemäß Beispiel 1 von DE-AS 2 426 657 wird durch die in Beispiel 2 beschriebene Reaktionsharzlösung gezogen und in einem Trockenturm bei 160 °C von Lösungsmittel befreit und gleichzeitig in den B-Zustand überführt. Nach dem Abkühlen auf Raumtemperatur erhält man ein festes, klebfreies, strangförmiges Gebilde, das in einem Schneidwerk in Stäbchen mit ca. 10 mm Länge zerkleinert wird. Diese Stäbchenpreßmasse wird in eine allseitig geschlossene, verchromte Stahlform gegeben und unter einem Druck von 39,2 bar bei 180 °C zu einer 4 mm dikken Platte verpreßt. Unter diesen Bedingungen schmilzt die ca. 10 % NCO-Gruppen enthaltende Harzmatrix noch einmal auf, die Glasfasern verschwimmen und es entsteht eine homogene, durchscheinende Platte, an der folgende Werte gemessen werden konnten :

| | | |
|---|---|---|
| Biegefestigkeit : | MPa | 140 |
| Schlagzähigkeit : | $kJ/m^3$ | 15 |
| Kugeldruckhärte : | MPa | 400 |
| Martensgrad : | °C | 234 |
| Glasgehalt : | % | 60 |

**Ansprüche**

1. Lösungsmittelfreie Formmassen, bestehend aus

A. 10 bis 80 Gew.-% eines lagerstabilen, durch Erhitzen zu einem vernetzten Polyurethan härtbaren Reaktivharz Bindemittels und

B. 20 bis 90 Gew.-% eines anorganischen Füllstoffes, dadurch gekennzeichnet, daß Komponente A. ein bei 25 °C klebfreies, unter 160 °C schmelzendes, noch freie NCO- und OH-Gruppen enthaltendes Umsetzungsprodukt aus

a) einem Novolak,

b) 0 bis 75 Gew.-%, bezogen auf a) + b), einer Polyhydroxylverbindung mit einem Molekulargewicht zwischen 62 und 10 000, welche mindestens 2 Hydroxylgruppen aufweisende Polyether, Polyester, Polyesteramide, Polycarbonate und Polythioether mit einem Molekulargewicht von 400 bis 10 000, als auch Polyole vom Molekulargewicht 62-400 sind,

c) einem Polyisocyanat in einem Äquivalentverhältnis (a + b) : c von 0,8 : 1 bis 1,2 : 1 und Komponente B. ein anorganisches Fasermaterial ist.

2. Formmasse nach Anspruch 1, dadurch gekennzeichnet, daß die Ausgangsverbindung b) der Komponente A. in einer Menge bis zu 50 Gew.-% eingesetzt worden ist und ein Molekulargewicht bis zu 5 000 besitzt und daß das Äquivalentverhältnis (a + b) : c zwischen 0,9 : 1 und 1,1 : 1 liegt.

3. Formmasse nach Anspruch 1 und 2, dadurch gekennzeichnet, daß der Umsetzungsgrad der Ausgangsverbindungen a) bis c) von Komponente A. 20 bis 70 % beträgt.

4. Formmasse nach Anspruch 3, dadurch gekennzeichnet, daß der Umsetzungsgrad 25 bis 50 % beträgt.

5. Formmasse nach Anspruch 1 bis 4, dadurch gekennzeichnet, daß Komponente B. ein Flächen-, Band- oder Strang-förmiges Material aus Glasfasern mit einer Stärke von 5 bis 50 μm ist.

6. Verfahren zur Herstellung von Formmassen nach Anspruch 1 bis 5, dadurch gekennzeichnet, daß man das anorganische Fasermaterial B mit dem Reaktivharz A in der Schmelze oder in einem inerten organischen Lösungsmittel gelöst, vermischt und das Reaktivharz durch Erwärmen auf 120 bis 220 °C, unter Verdampfen des gegebenenfalls mitverwendeten Lösungsmittels, teilweise aushärtet, so daß das Harz bei 25 °C klebfrei ist, aber noch einen Schmelzpunkt unterhalb von 160 °C aufweist.

7. Verfahren nach Anspruch 6, dadurch gekennzeichnet, daß das Äquivalentverhältnis (a + b) : c zwischen 0,9 : 1 und 1,1 : 1 liegt.

8. Verfahren nach Anspruch 6 und 7, dadurch gekennzeichnet, daß die Komponenten a) + b) in Form einer 30 bis 90 Gew.-%igen Lösung in einem organischen Lösungsmittel eingesetzt werden.

9. Verfahren nach Anspruch 6 bis 8, dadurch gekennzeichnet, daß die Umsetzung der Komponenten a) bis c) bis zu einem Umsetzungsgrad von 20 bis 70 % geführt wird.

10. Verfahren zur Herstellung faserverstärkter, duroplastischer Formkörper, dadurch gekennzeichnet, daß man Formmassen nach Anspruch 1 bis 5 durch Erhitzen auf 140 bis 220 °C unter Formgebung aushärtet.

## Claims

1. Solvent-free moulding compositions consisting of

A. 10 to 80 % by weight of a storage-stable reactive resin binder which may be hardened by heating to form a crosslinked polyurethane and

B. 20 to 90 % by weight of an inorganic filler, characterised in that component A is a reaction product of

a) a novolak,

b) 0 to 75 % by weight, based on a) + b), of a polyhydroxyl compound having a molecular weight between 62 and 10,000, which are polyethers, polyesters, polyester amides, polycarbonates and polythioethers containing at least 2 hydroxyl groups and having a molecular weight of 400 to 10,000, as well as polyols having a molecular weight of 62-400, and

c) a polyisocyanate in an equivalent ratio (a + b) : c of 0.8 : 1 to 1.2 : 1, which is tack-free at 25 °C, melts below 160 °C and still contains free NCO and OH groups, and component B. is an inorganic fibre material.

2. Moulding composition according to Claim 1, characterised in that the starting compound b) of component A. has been used in an amount of up to 50 % by weight and has a molecular weight of up to 5 000, and in that the equivalent ratio (a + b) : c is between 0.9 : 1 and 1.1 : 1.

3. Moulding composition according to Claim 1 and 2, characterised in that the degree of conversion of the starting compounds a) to c) of component A. is 20 to 70 %.

4. Moulding composition according to Claim 3, characterised in that the degree of conversion is 25 to 50 %.

5. Moulding composition according to Claim 1 to 4, characterised in that component B. is a sheetform, band-form or strand-form material of glass fibres having a thickness of 5 to 50 μm.

6. Process for the production of moulding compositions according to Claim 1 to 5, characterised in that the inorganic fibre material B is mixed with the reactive resin A, in the melt or in solution in an inert organic solvent, and the reactive resin is partly hardened by heating to 120 to 220 °C, with evaporation of the solvent used, if any, so that the resin is tack-free at 25 °C but still has a melting point below 160 °C.

7. Process according to Claim 6, characterised in that the equivalent ratio (a + b) : c is between 0.9 : 1 and 1.1 : 1.

8. Process according to Claim 6 and 7, characterised in that the components a) + b) are used in the form of a 30 to 90 % by weight solution in an organic solvent.

9. Process according to Claim 6 to 8, characterised in that the reaction of components a) to c) is carried out up to a degree of conversion of 20 to 70 %.

10. Process for the production of fibre-reinforced, duroplastic mouldings, characterised in that moulding compositions according to Claim 1 to 5 are hardened during forming by heating to 140 to 220 °C.

**Revendications**

1. Matières à mouler sans solvant, consistant en

A. 10 à 80 % en poids d'un liant, résine réactive durcissable par chauffage en un polyuréthanne réticulé, et

B. 20 à 90 % en poids d'une charge minérale, caractérisées en ce que le composant A. est un produit, non collant à 25 °C, fondant au-dessous de 160 °C, contenant encore des groupes NCO et OH libres, de réaction de

a) une novolaque,

b) 0 à 75 % en poids, par rapport à a) + b), d'un composé polyhydroxylé présentant un poids moléculaire compris entre 62 et 10 000, qui est formé par des polyéthers, des polyesters, des polyesteramides, des polycarbonates et des polythioéthers présentant un poids moléculaire de 400 à 10 000 et présentant au moins deux groupes hydroxyle, ainsi que des polyols d'un poids moléculaire de 62 à 400,

c) un polyisocyanate selon un rapport entre équivalents (a + b) : c de 0,8 : 1 à 1,2 : 1 et le composant B. est une matière fibreuse minérale.

2. Matière à mouler selon la revendication 1, caractérisée en ce que le composé de départ b) du composant A. a été introduit en une quantité allant jusqu'à 50 % en poids et possède un poids moléculaire allant jusqu'à 5 000, et en ce que le rapport entre les équivalents (a + b) : c se situe entre 0,9 : 1 et 1,1 : 1.

3. Matière à mouler selon l'une des revendications 1 et 2, caractérisée en ce que le degré de réaction des composés de départ a) à c) du composant A. se situe entre 20 et 70 %.

4. Matière à mouler selon la revendication 3, caractérisée en ce que le degré de réaction se situe entre 25 et 50 %.

5. Matière à mouler selon l'une des revendications 1 à 4, caractérisée en ce que le composant B. est une matière plate, en forme de bande ou de ruban de fibres de verre ayant une épaisseur de 5 à 50µm.

6. Procédé pour produire des matières à mouler selon l'une des revendications 1 à 5, caractérisé en ce que l'on mélange la matière minérale fibreuse B avec la résine réactive A à l'état fondu ou dissoute dans un solvant organique inerte et l'on durcit partiellement la résine réactive par chauffage à 120 jusqu'à 220 °C, avec évaporation du solvant éventuellement aussi utilisé, de sorte que la résine n'est pas collante à 25 °C mais présente encore un point de fusion inférieur à 160 °C.

7. Procédé selon la revendication 6, caractérisé en ce que le rapport entre les équivalents (a + b) : c se situe entre 0,9 : 1 et 1,1 : 1.

8. Procédé selon l'une des revendications 6 et 7, caractérisé en ce qu'on utilise les composants a) + b) sous forme d'une solution à 30 à 90 % en poids dans un solvant organique.

9. Procédé selon l'une des revendications 6 à 8, caractérisé en ce qu'on conduit la réaction des composants a) à c) jusqu'à un degré de réaction de 20 à 70 %.

10. Procédé pour produire des pièces thermodurcissables moulées à armature de fibres, caractérisé en ce qu'on durcit, par chauffage à 140 jusqu'à 220 °C avec formage ou moulage, des matières à mouler selon l'une des revendications 1 à 5.